# EUROPEAN PATENT APPLICATION

(11) **EP 1 826 403 A1**
(43) Date of publication of application: **29.08.2007**
(21) Application number: 06386002.7
(22) Date of filing: 27.02.2006
(51) Int. Cl.: F03G 3/00, F03G 7/10

(54) **A method of using gravity and elevation of weights to produce work**

(71) Applicant: Mandi, Jani, 28 Ag. Georgiou Str. 57008 Ionia, Thessaloniki (GR)
(72) Inventor: Mandi, Jani, 28 Ag. Georgiou Str. 57008 Ionia, Thessaloniki (GR)

(57) **Abstract**

In both models, that we present, it can be applied the elevation method, which is the main element of the invention.
In model (1) the elevation is ensured by the balance system (3-4), it produces about 60 % work from the work, which we ensure by the gravity.
In model (2) the balance system is developed in the diameter between the weights (A-B). The same happens in this machine, the beneficial work is about 60%.

## Description

The power of the gravity has been exploited by human from antiquity until today (e.g. Hydro turbine e.t.c)

The hydro electrical stations, which produce energy, are depended by the sources of water and by the elevation difference.

### PRESENTATION OF THE INVENTION

According to this invention the weight, which exploit in order to produce work, returns to its initial position without consuming work.

The new element of this invention, is based to the elevation method through an equilibrium system.

We present the invention with two simple models.

The first model includes an object without certain weight but with certain parameters, which define the equilibrium system.

The sight 1 presents the object (1) with weight X and there is in the bottom of the equilibrium system.

The equilibrium system is constituted by accessories (3-4).

The object (2) opens and rise in the grade that the attachment allows (5).

The sight (2) shows the greatest high, which the object (2) can obtain through the equilibrium elevation system.

After this, the attachment (4) spoils the equilibrium system, the gravity is activated, the object (2) begins its descent, as it is presented between the sight (2) and the sight (3).

With these movements of the object (2), is defined the beneficial work, which we collect.

If the body is (2) =X, and the distance=(S) in our case it will be S=4 cm. The work begins with 0,3X and ends in X. If X=5 kg then 0,3X=1,5 kg.
(1,5 kg +5 kg)/2 = 3,25 kg average.
3,25 kg x 4 cm = 14 kg/cm, work.

In order to activate the equilibrium elevation system we waste 1X = 5 kg/cm.

The theoretical benefit of the work remains 9 kg/cm = 60%.

If we transform this model into a work production machine, it will be a disadvantage. We have to face the rupture, which is gained by the object (2) when it ends in order to activate the balance.

According to the invention, if we transform this model into a work production machine is desirable to be put many objects to the same crank with different angles, in order to have regular movement.

According to this thought, when there is a case of application of the gravity elevation model, there has to be another case, as for example the model (2), which is presented.

The model (2) is a simple rotating machine, which can be applied to the gravity elevation combination method, which transforms the power of the gravity into work. The simple model is presented only with two weights. In order to have bigger work production, regular movement to the same perimeter, we put more than two couples of weights.

The sight (1) shows the two weights in balance. From the sight (1) to the sight (2) the gravity is activated, the same time the two weights are rotating, the weight B opens growing the diameter, while it changes the diametrical axis.

As a result, in order to activate the gravity according to the practical measuring, we waste about 10 kg/cm work.

The sight (2) presents the spot, where there were the weights A/B.

The distance S^{A} - S^{B} =6cm.
6 cm x 5 kg = 30 kg/cm work.

The theoretical result will be about 65 % profit, and calculating the frictions we measure only the 50 %.

Second option of calculating the work is the difference of the spokes
R1/R2 = 1,39
5 kg/1,39 = 3,597
5 kg - 3, 597 = 1,403 kg. The weight A is 1,403 kg heavier than the weight B. If we multiply the 1,403 x 21 cm = 29,463 kg/cm, there is almost confirmed the first result.

The advantage of the model (2) is that the machine has great rhythmical restitution, works noiseless without rattling, has low cost of production, produces 100 % ecological energy, it can be put to every spot of the planet and inside the sea, if it has isolation. The disadvantage of this invention (for now) is that because of their own weight; there have to work in the ground in a steady spot.

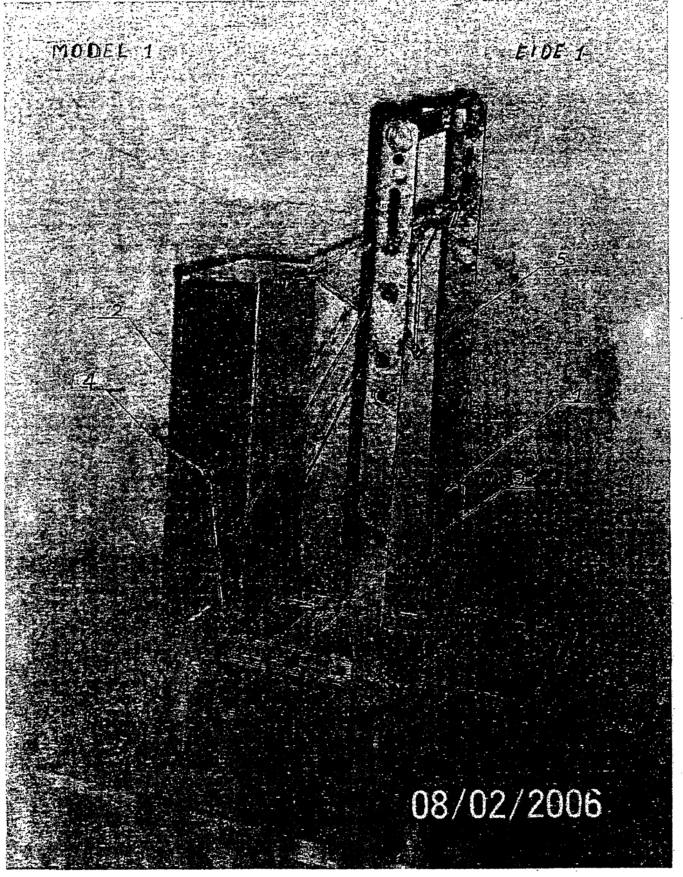

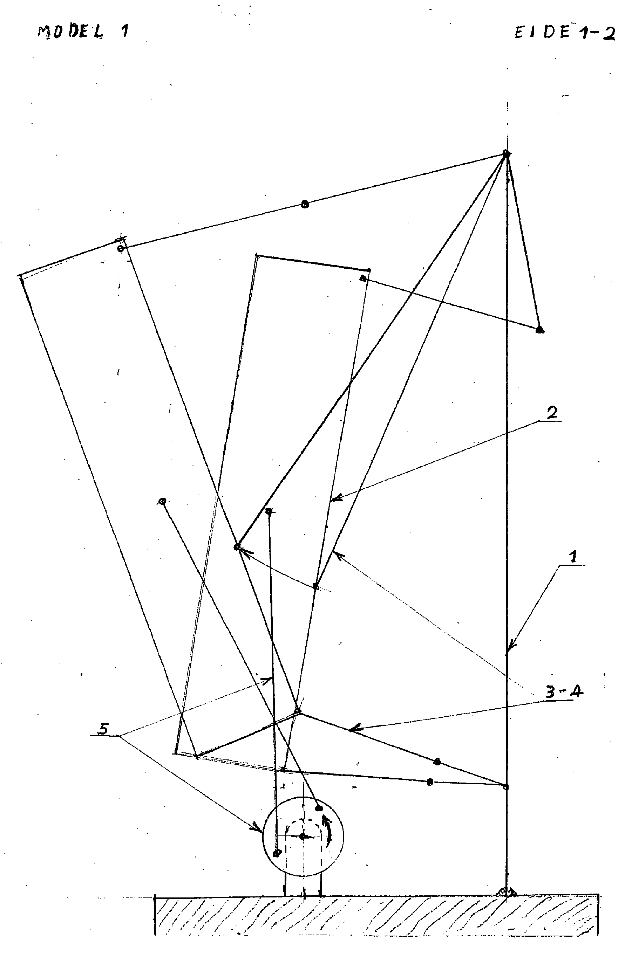

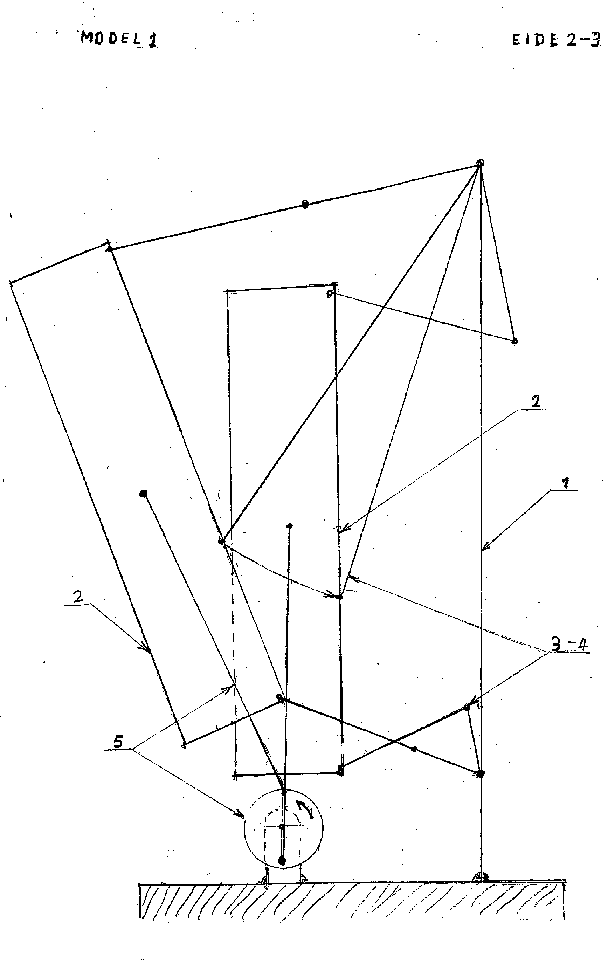

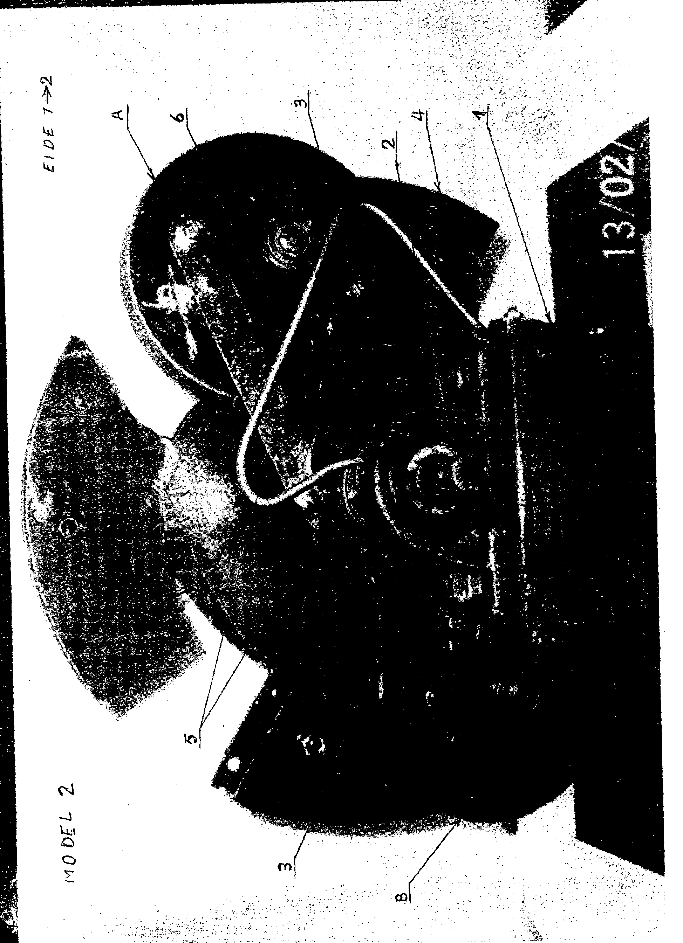

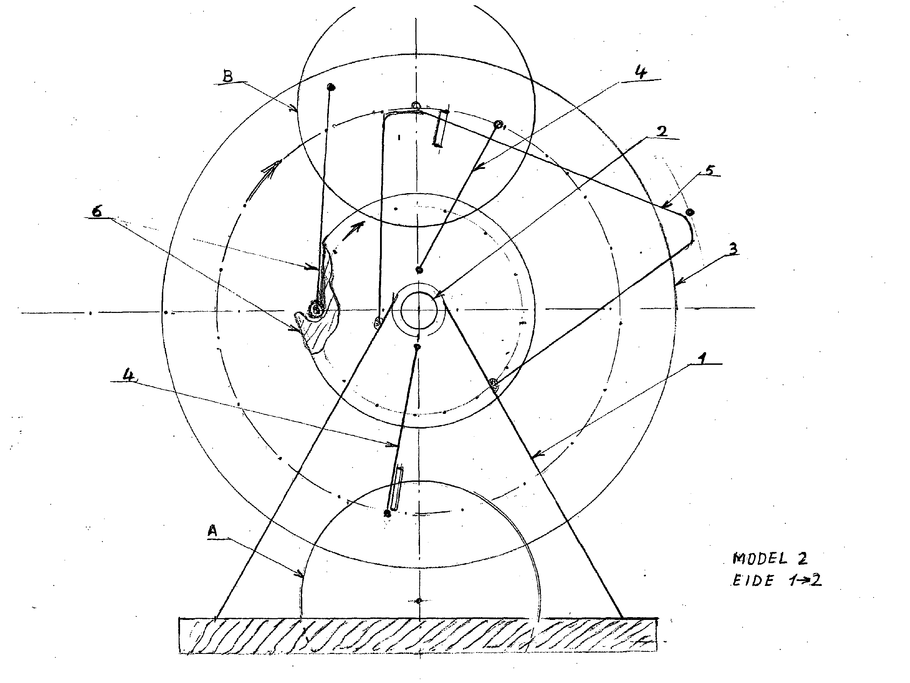

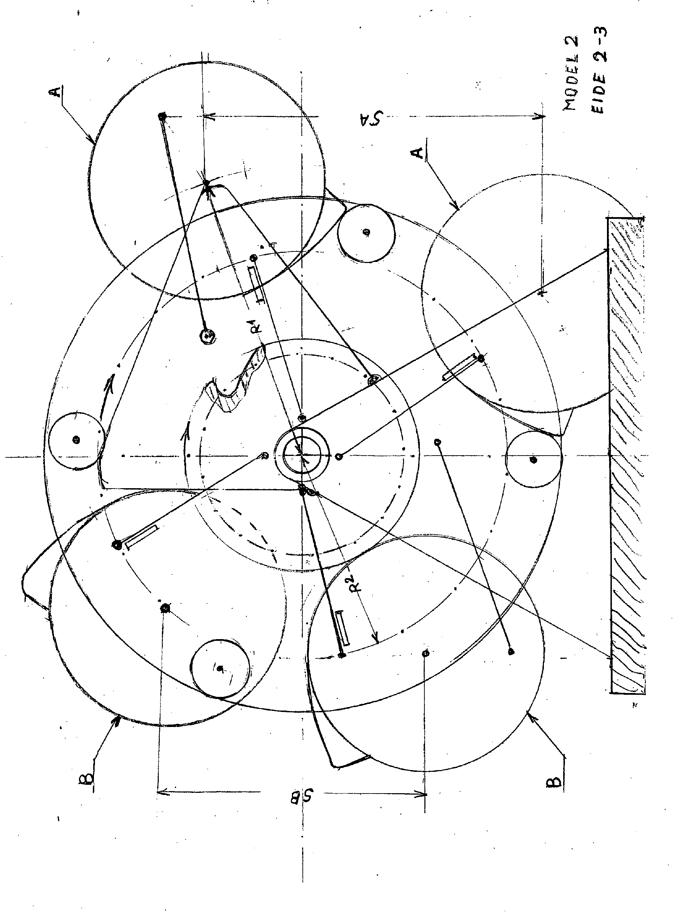

## Claims

1. The perpendicular machine model (1) is constituted by the base (1) with which relies on the ground, the body (2), the balance accessories (3 - 4) and the movement attachment (5).

2. Depended pretension. The model (2) if we transform it to a machine is desirable to put more than two bodies (2) to different angles in order to have normal movement and greater production.

3. Pretension No 2. The rotating machine, where can be applied the gravity elevation combination method. According top the model (2) it is constituted by the base (1), the axis (2) the disc (3), a pair of weights (A - B), the connective spokes (4), the check guide of the movement (5) and by two accessories, which activate the gravity (6).

4. Depended pretension. In order to have more regular movement and greater production in the rotating machine, in the same perimeter we put in different angles more than one pair of weights, in the grade that the perimeter allows.
